# EUROPÄISCHE PATENTSCHRIFT

(11) **EP 4 435 307 B1**
(45) Veröffentlichungstag und Bekanntmachung des Hinweises auf die Patenterteilung: **13.05.2026**
(21) Anmeldenummer: 24162084.8
(22) Anmeldetag: 07.03.2024
(51) Int. Cl.: F16L 11/118, F16L 25/00, F16L 11/12, F16L 11/22, H02G 3/04, H02G 3/06, B29C 48/09, B29C 48/13, B29C 48/21, B29C 48/30, B29C 48/49, F16L 21/035, B29C 48/32, B29C 48/86, B29C 48/87

(54) **ANORDNUNG MIT KUNSTSTOFFROHR UND KUNSTSTOFFMUFFE**
ASSEMBLY WITH PLASTIC PIPE AND PLASTIC SLEEVE
ENSEMBLE COMPRENANT UN TUYAU EN PLASTIQUE ET UN MANCHON EN PLASTIQUE

(30) Priorität: 21.03.2023 DE 102023202512
(43) Veröffentlichungstag der Anmeldung: 25.09.2024
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Schneck & Hübner Patentanwälte Rechtsanwälte PartGmbB

(56) Entgegenhaltungen:
- EP-A1- 0 322 508
- DE-A1- 102013 109 111
- DE-A1- 102014 218 372
- US-A- 3 695 643
- US-A- 3 897 090
- US-A- 3 899 198
- US-A- 4 915 425

## Beschreibung

Die vorliegende Patentanmeldung nimmt die Priorität der deutschen Patentanmeldung DE 10 2023 202 512.4 in Anspruch.

Die Erfindung betrifft eine Anordnung mit einem Kunststoffrohr und einer Kunststoffmuffe.

DE 10 2013 109 111 A1 offenbart einen Schlauch mit mehreren Lumen.

Der Schlauch weist eine im Wesentlichen runde Basiswand auf, die einen Innenbereich definiert, mehrere Wellungen, die sich von der Basiswand radial nach außen erstrecken, und eine innerhalb der Basiswand angeordnete Trennwand, um den Innenbereich in wenigstens ein erstes Lumen und ein zweites Lumen zu unterteilen. Die Trennwand ist an der runden Basiswand befestigt. Weiterhin weist der Schlauch eine erste Auswölbung auf, die sich von der runden Basiswand zwischen benachbarten Wellungen in einem lokalen Bereich um die Trennwand herum nach außen erstreckt, wobei die Trennwand an der ersten Auswölbung befestigt ist. Der Schlauch weist ferner eine zweite Auswölbung auf, die sich von der runden Basiswand zwischen benachbarten Wellungen in einem lokalen Bereich um die Trennwand herum nach außen erstreckt, wobei die Trennwand an der zweiten Auswölbung befestigt ist. Die mehreren Wellungen erstrecken sich über die erste und die zweite Auswölbung hinaus.

EP 2 960 387 A1 offenbart einen Rohr-Verbindungs-Bausatz.

US 5,305,797 offenbart einen Bausatz für Rohrelemente.

DE 10 2009 056 975 B3 offenbart ein rohrförmiges Bauteil.

US 3,578,777 offenbart ein Wellrohr.

US 2006/0254663 A1 offenbart ein Wellrohr mit veränderlicher Steifigkeit.

EP 0 322 508 A1 offenbart ein Rohrverbindungs-Element.

DE 10 2014 218 372 A1 offenbart einen Inspektions- bzw. Revisions-Schacht aus Kunststoff.

US 3,899,198 offenbart eine Verbindungsmuffe für Kunststoff-Wellrohre.

US 3,695,643 offenbart eine Kupplung für Wellrohre.

US 3,897,090 offenbart ein Kunststoff-Wellrohr mit integral angeformter Muffe.

Rohre mit innenliegenden Kammern, die auch als Mehrfachkanäle bezeichnet werden, finden beispielsweise für die Wasseraufbereitung in der Abwassertechnik oder als Kabelschutzrohre Anwendung. Bei der axialen Verbindung von Rohren mit Mehrfachkanälen ist eine exakte Drehpositionierung der Rohre zueinander erforderlich, um die Funktionalität der Mehrfachkanäle zu gewährleisten. Bei Sickerrohren werden sogenannte Scheitelmarkierungen aufgedruckt oder als Farbstreifen beispielsweise bei der Extrusion von Verbundrohren eingearbeitet. Die Scheitelmarkierungen ermöglichen eine winkelgenaue Anordnung hintereinanderliegender Rohre, können aber eine fehlerhafte Montage in Folge ungenauer Arbeitsweise nicht verhindern.

Der Erfindung liegt die Aufgabe zu Grunde, die winkelgenaue Axialverbindung von Kunststoffrohren mit Mehrfachkanälen zu verbessern und insbesondere fehlersicher auszuführen.

Diese Aufgabe ist durch eine Anordnung mit den in Anspruch 1 angegebenen Merkmalen gelöst.

Erfindungsgemäß wurde erkannt, dass eine bezüglich einer Rohrlängsachse in Umfangsrichtung drehwinkelgenaue Verbindung von axial hintereinanderliegenden Kunststoffrohren fehlersicher ausführbar ist, wenn ein Kunststoffrohr ein Verdrehschutzelement aufweist. Das Verdrehschutzelement ist an Erhebungen, die an einer Rohraußenseite angeordnet sind, angebracht. Die Erhebungen sind Wellen oder Rippen, die senkrecht zur Rohrlängsachse orientiert sind. Das Verdrehschutzelement garantiert einen mechanischen Verdrehschutz für das Kunststoffrohr. Das Verdrehschutzelement ist insbesondere in einer Ebene senkrecht zur Rohrlängsachse exzentrisch bezüglich der Rohrlängsachse angeordnet. Das Verdrehschutzelement hat in der senkrecht zur Rohrlängsachse orientierten Ebene einen Radialabstand zur Rohrlängsachse. Das Verdrehschutzelement erstreckt sich parallel zur Rohrlängsachse, ist also axial orientiert.

Insbesondere weist mindestens eine Erhebung das Verdrehschutzelement auf.

Insbesondere weisen mehrere Erhebungen jeweils ein Verdrehschutzelement auf. Das Verdrehschutzelement ist bezüglich der Rohrlängsachse an einer Axialposition angeordnet, an der auch ein Verdrehschutzelement angeordnet ist. Insbesondere weist das Kunststoffrohr in erhebungsfreien Bereichen, also insbesondere in Bereichen, die axial zwischen zwei benachbarten Erhebungen ausgebildet sind, eine rotationssymmetrische Außenkontur auf. Insbesondere ist der axiale Zwischenbereich verdrehschutzelementfrei ausgeführt.

Das Verdrehschutzelement weist eine axiale Länge auf, die insbesondere größer ist als ein Axialabstand zwischen zwei axial benachbart angeordneten Erhebungen. Das bedeutet, dass mehrere, insbesondere mindestens zwei, axial benachbart angeordnete Erhebungen das Verdrehschutzelement aufweisen.

Entsprechend weist eine Kunststoffmuffe der erfindungsgemäßen Anordnung ein Verdrehschutzgegenelement auf, das zu dem Verdrehschutzelement des Kunststoffrohres korrespondiert. Das Kunststoffrohr ist mit dem Verdrehschutzelement an dem Verdrehschutzgegenelement der Kunststoffmuffe in einer Drehwinkelposition bezüglich der Rohrlängsachse eindeutig festgelegt. Eine unbeabsichtigt verdrehte und/oder ungenaue Anordnung der Kunststoffrohre zueinander in Umfangsrichtung bezüglich der Rohrlängsachse ist zuverlässig ausgeschlossen. Die Verbindung der Kunststoffrohre ist fehlersicher.

Das Kunststoffrohr und die Kunststoffmuffe der erfindungsgemäßen Anordnung ermöglichen eine Axialverbindung zueinander nach einem Nut-Feder-Prinzip. Diese Verbindungstechnik ist unkompliziert, mechanisch robust und intuitiv handhabbar.

Eine drehwinkelexakte Verbindung von Mehrfachkanälen in dem Kunststoffrohr ist sichergestellt. Die Mehrfachkanäle sind Kammern in einem Rohrinnenraum des Kunststoffrohrs. Die Kammern erstrecken sich jeweils axial, also entlang der Rohrlängsachse. Die Kammern sind insbesondere durch mindestens ein Trennelement in dem Rohrinnenraum voneinander getrennt.

Eine Anordnung gemäß Anspruch 1 gewährleistet mit der Kunststoffmuffe die erfindungsgemäß fehlersichere Positionierung bezüglich des Kunststoffrohres und ermöglicht die fehlersichere Verbindung mit dem Kunststoffrohr. Die Kunststoffmuffe weist ein Axialanschlagelement auf, an dem das Kunststoffrohr in der Kunststoffmuffe axial festgelegt ist, insbesondere durch axiales Anliegen. Das Axialanschlagelement ist eine Anlageschulter.

An das Axialanschlagelement schließt sich ein Muffenrohrabschnitt an, der bezüglich einer Muffenlängsachse zylindrisch und/oder konisch ausgeführt sein kann, wobei ein Konizitätswinkel klein ist und insbesondere kleiner als 5°, insbesondere kleiner als 3° und insbesondere kleiner als 1°.

Die Kunststoffmuffe weist eine Einführöffnung auf, an der das Kunststoffrohr eingeführt wird. Zu der Einführöffnung hin ist ein aufweitender Einführabschnitt angeordnet. Wesentlich ist, dass das Verdrehschutzgegenelement an einer Innenwand des Muffenrohrabschnitts angeordnet ist und damit die verdrehschutzgesicherte Anordnung des Kunststoffrohres sicherstellt.

Insbesondere weist das Verdrehschutzgegenelement eine axiale Länge auf, die größer ist als ein Axialabstand zwei benachbart angeordneter Erhebungen an dem Kunststoffrohr. Das bedeutet, dass beim Koppeln des Kunststoffrohres mit der Kunststoffmuffe das Verdrehschutzgegenelement mit mindestens zwei axial benachbart angeordneten Erhebungen, insbesondere deren Verdrehschutzelementen, zusammenwirkt. Insbesondere greift das Verdrehschutzgegenelement in radialer Richtung in das Verdrehschutzelement ein oder umgekehrt.

Eine Anordnung gemäß Anspruch 1 weist die Vorteile des Kunststoffrohres und der Kunststoffmuffe auf, worauf hiermit verwiesen wird. Bei der Anordnung ist das Kunststoffrohr mit der Rohrlängsachse koaxial zu der Muffenlängsachse der Kunststoffmuffe angeordnet.

Eine Anordnung gemäß Anspruch 2 ermöglicht mit der Ausführung des Kunststoffrohres eine unkomplizierte Herstellung. Das Verdrehschutzelement erstreckt sich insbesondere in radialer

Richtung bezüglich der Rohrlängsachse, insbesondere als radiale Vertiefung, insbesondere als Außennut, oder als radiale Erhebung, insbesondere in Form eines Außensteges. Das Verdrehschutzelement ist optisch und haptisch unmittelbar wahrnehmbar.

Eine Anordnung gemäß Anspruch 3 ermöglicht mit der Ausführung des Kunststoffrohres eine unkomplizierte Fertigung, insbesondere im Extrusionsverfahren. Dadurch, dass das Verdrehschutzelement einteilig angeformt ist, ist es mechanisch robust ausgeführt. Das Verdrehschutzelement ist integral ausgebildet. Zusätzliche Herstellungsschritte sind nicht erforderlich.

Eine Anordnung gemäß Anspruch 4 gewährleistet mit der Ausführung des Kunststoffrohres eine stabile Verbindungstechnik. Insbesondere erstreckt sich das Verdrehschutzelement entlang der gesamten Länge des Kunststoffrohres. Die Herstellung ist besonders unkompliziert und kontinuierlich möglich.

Eine Anordnung gemäß Anspruch 5 vereinfacht mit der Ausführung des Verdrehschutzelements die axiale Verbindung mit der Kunststoffmuffe.

Die Anordnung gemäß Anspruch 6 vermeidet mit der Ausführung des Verdrehschutzelements Spannungsspitzen im Kunststoffmaterial und/oder herstellungsbedingte Fehlstellen.

Eine Anordnung gemäß Anspruch 7 ermöglicht mit der Ausführung des Kunststoffrohres vielfältige Anwendungsfelder, insbesondere im Bereich der Abwassertechnik.

Eine Anordnung gemäß Anspruch 8 vereinfacht mit der Ausführung des Kunststoffrohres die Herstellung der Mehrfachkanäle. An mindestens einem Führungselement, das an einer Rohrinnenseite angeordnet ist, kann mindestens ein Trennelement gehalten werden, insbesondere lösbar gehalten werden. Das Trennelement kann insbesondere axial in das Rohr eingeschoben werden. Insbesondere kann das Trennelement aus dem Rohr wieder entfernt werden. Montage und/oder Demontage des Kunststoffrohres mit Trennelement sind vereinfacht und unaufwendig möglich. Insbesondere kann das Trennelement zerstörungsfrei von dem Kunststoffrohr entfernt werden. Das mindestens eine Führungselement ist integral an der Rohrinnenseite ausgebildet. Insbesondere sind Führungselement und Verdrehschutzelement an unterschiedlichen Drehwinkelpositionen in Umfangsrichtung um die Rohrlängsachse angeordnet, insbesondere mit einem Drehwinkelversatz von 90°. Es kann auch ein anderer Drehwinkelversatz oder kein Drehwinkelversatz gewählt werden.

Eine Anordnung gemäß Anspruch 9 gewährleistet mit der Ausführung der Kunststoffmuffe eine Abdichtung des Kunststoffrohres in der Kunststoffmuffe. Es wurde erkannt, dass ein Dichtungsabschnitt, der entlang der Muffenlängsachse zwischen dem Axialanschlagelement und dem Muffenrohrabschnitt angeordnet ist, verdrehschutzgegenelementfrei, insbesondere zylindrisch, ausgeführt sein kann. In dem Dichtungsabschnitt kann ein Profildichtring zuverlässig und abdichtend angeordnet werden.

Eine Anordnung gemäß Anspruch 10 oder 11 ermöglicht mit der Ausführung der Kunststoffmuffe verschiedene vorteilhafte Verbindungstechniken.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine Vorrichtung zur kontinuierlichen Herstellung eines Kunststoffrohres mit einteilig angeformter Verbindungsmuffe,
- Fig. 2: einen Längsschnitt eines Spritzkopfes der Vorrichtung in Fig. 1,
- Fig. 3: eine teilgeschnittene Seitenansicht eines in der Vorrichtung gemäß Fig. 1 und 2 hergestellten Kunststoffrohres gemäß einem ersten Ausführungsbeispiel mit einteilig angeformter Verbindungsmuffe,
- Fig. 4: eine Schnittdarstellung gemäß Schnittlinie IV-IV in Fig. 3,
- Fig. 5: eine Schnittdarstellung gemäß Schnittlinie V-V in Fig. 3,
- Fig. 6: eine vergrößerte Detaildarstellung eines Verdrehschutzelements gemäß einem ersten Ausführungsbeispiel an dem Kunststoffrohr in Fig. 5,
- Fig. 7 und 8: weitere Ausführungsbeispiele eines Verdrehschutzelements,
- Fig. 9: eine Fig. 3 entsprechende Darstellung einer Anordnung mit dem in der Verbindungsmuffe gemäß Fig. 3 verdrehsicher angeordneten Kunststoffrohr,
- Fig. 10: eine Schnittdarstellung gemäß Schnittlinie X-X in Fig. 9,
- Fig. 11: eine Fig. 3 entsprechende Darstellung eines Kunststoffrohrs gemäß einem weiteren Ausführungsbeispiel,
- Fig. 12: eine teilgeschnittene Längsansicht einer Kunststoffmuffe gemäß einem weiteren Ausführungsbeispiel als Doppelsteckmuffe,
- Fig. 13: eine Ansicht gemäß Pfeil XIII in Fig. 12,

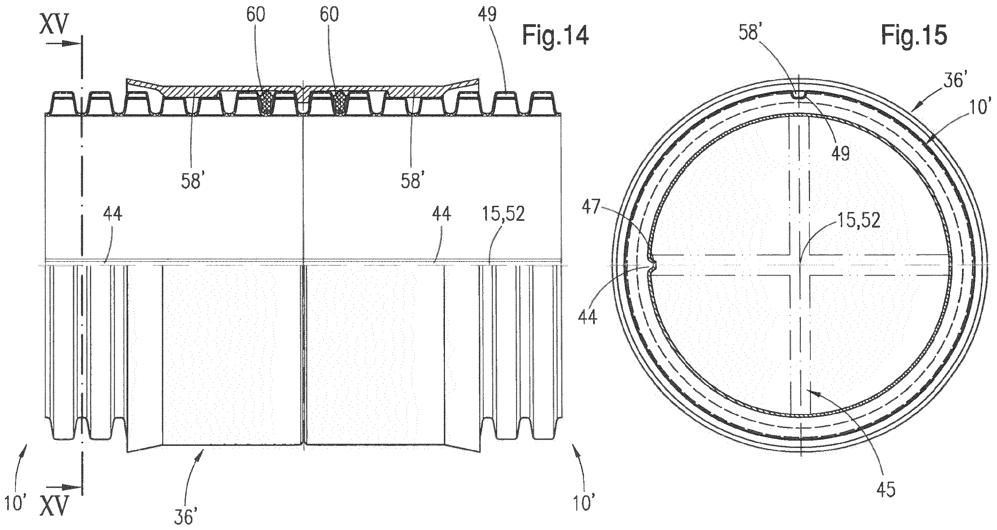

- Fig. 14: eine teilgeschnittene Seitenansicht einer Anordnung mit dem Kunststoffrohr gemäß Fig. 11 in der Doppelsteckmuffe gemäß Fig. 12,
- Fig. 15: eine Schnittdarstellung gemäß Schnittlinie XV-XV in Fig. 14.

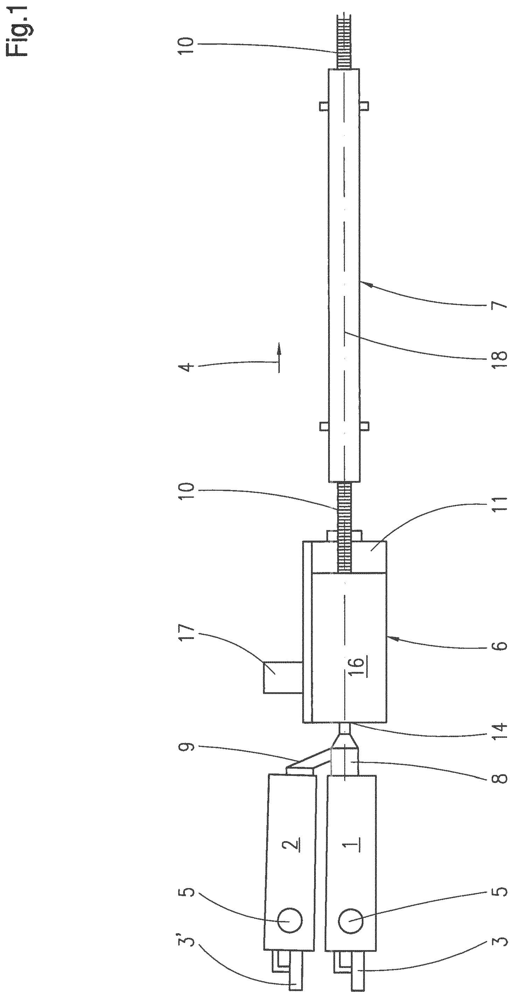

Eine in Fig. 1 dargestellte Vorrichtung zur Herstellung von Verbundrohren weist zwei Extruder 1, 2 auf. Diese werden jeweils von einem drehzahlregelbaren Antriebsmotor 3, 3' angetrieben, der - bezogen auf eine Förderrichtung 4 der gesamten Vorrichtung - stromaufwärts von Zuführtrichtern 5 der Extruder 1, 2 vorgesehen ist.

Bezogen auf die Förderrichtung 4 stromabwärts von den Extrudern 1, 2 ist eine Formmaschine 6, ein sogenannter Corrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge geschnitten werden. Die Formmaschine 6 ist in ihrem Aufbau bekannt und beispielsweise in der EP 0 563 575 A2 beschrieben, worauf ausdrücklich verwiesen wird.

Sie weist im Wesentlichen einen Maschinentisch 11 auf, auf dem Halbkokillen 12, 12' angeordnet sind, die jeweils zu zwei sogenannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinander folgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittellängsachse 18 angeordnete Schmelzekanäle, nämlich einen inneren Schmelzekanal 19 und einen äußeren Schmelzekanal 20, die - bezogen auf die Förderrichtung 4 - stromabwärts in einer Innendüse 21 bzw. einer Au-βendüse 22 enden. Der innere Schmelzekanal 19 ist an einem Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist.

Am - bezogen auf die Förderrichtung 4 - stromabwärtigen Ende des Spritzkopfes 8 ist an diesem ein Kalibrierdorn 24 angebracht, der ebenfalls konzentrisch zur Mittellängsachse 18 verläuft. Er weist Kühlkanäle 25 für Kühlmedium, insbesondere Kühlwasser, auf, das über eine Kühlwasser-Vorlaufleitung 26 zugeführt und eine Kühlwasser-Rücklaufleitung 27 abgeführt wird. Die Leitungen 26, 27 können durch einen konzentrisch zur Mittellängsachse 18 im Spritzkopf 8 ausgebildeten, etwa rohrförmigen Versorgungskanal geführt sein.

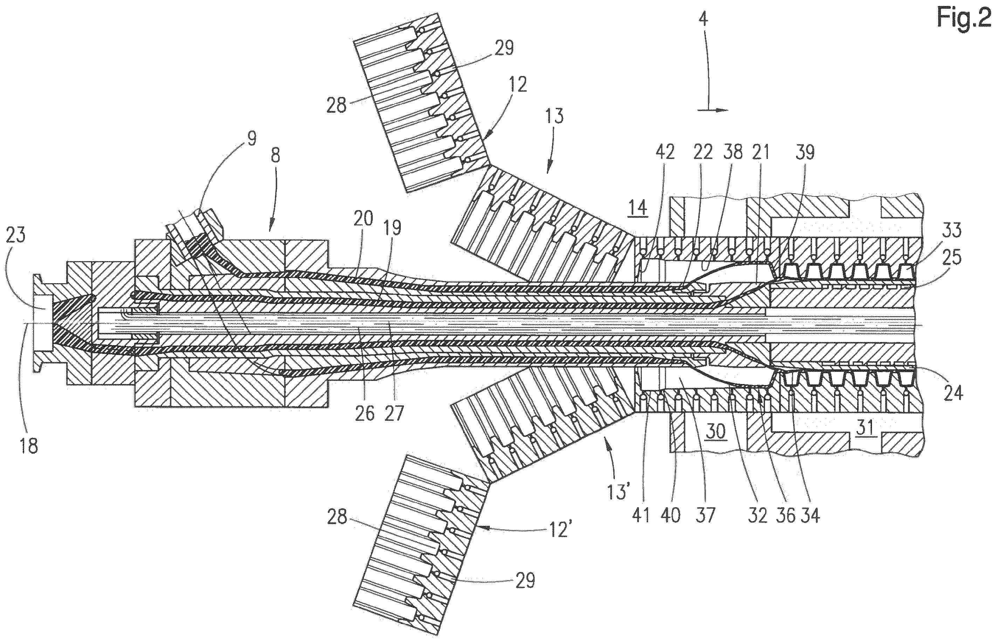

Die Halbkokillen 12, 12' weisen ringförmige Formausnehmungen 28 auf, die in regelmäßigen Abständen hintereinander angeordnet sind und die jeweils an Teilvakuumkanälen 29 angeschlossen sind. Beim Einlauf der Halbkokillen 12, 12' in die Formstrecke 16 gelangen die Teilvakuumkanäle 29 - wie Fig. 2 entnehmbar ist - an Teilvakuumversorgungsquellen 30, 31, so dass die Formausnehmungen 28 mit Teilvakuum beaufschlagt werden.

Die vom Extruder 2 durch den Spritzkanal 9 dem Spritzkopf 8 zugeführte Kunststoffschmelze strömt durch den äußeren Schmelzekanal 20 zur Au-βendüse 22 und wird dort unter Formung eines Außenrohres 32 extrudiert. Aufgrund des Teilvakuums legt sich das Außenrohr 32 unter Formung eines mit Querrillen versehenen Rohres in die Formausnehmungen 28. Die Querrillen bilden Erhebungen 33 an der Rohraußenseite. Aus dem Extruder 1 wird durch den Spritzkanal 23 dem Quer-Spritzkopf 8 Kunststoffschmelze zugeführt und strömt durch den inneren Schmelzekanal 19 zur Innendüse 21 und tritt dort als Innenrohr 34 aus, das auf den Kalibrierdorn 24 gelangt. Dieser erweitert sich von der Innendüse 21 in Förderrichtung 4 leicht nach außen, bis das Innenrohr 34 gegen die Wellentäler 35 des Außenrohres 32 gelangt und mit diesem verschweißt wird.

Das Innenrohr 34 und das Außenrohr 32 bilden nach Abkühlung und Erstarrung einen Rohrgrundkörper des Verbundrohres 10.

Das Verbundrohr 10 weist eine Rohrlängsachse 15 auf. Bei dem Verbundrohr 10 ist das Innenrohr 34 mit dem Außenrohr 32 im Bereich der Wellentäler 35 verschweißt. Bei dem Außenrohr 32 sind die Querrillen als senkrecht zur Rohrlängsachse 15 orientierte Erhebungen 33 ausgebildet. Das Außenrohr 32 bildet eine Rohraußenseite des Verbundrohres 10. Das Innenrohr 34 ist bezüglich der Rohrlängsachse 15 zylindrisch ausgeführt mit einer im Wesentlichen glatten Rohrinnenseite 43.

Das Innenrohr 34 weist an der Rohrinnenseite 43 ein integral ausgebildetes, also einteilig angeformtes, Führungselement 44 auf. Die Kontur des Führungselements 44 kann insbesondere mittels einer nicht näher dargestellten Formstruktur des Kalibrierdorns 24 im Extrusionsverfahren hergestellt werden. Die Kontur des Führungselements 44 korrespondiert zu der Kontur der Formstruktur am Kalibrierdorn 24. Das Führungselement 44 erstreckt sich parallel zur Rohrlängsachse 15. Das Führungselement 44 ist axial orientiert. Das Führungselement 44 bildet einen Führungssteg oder eine Führungsschiene.

Das Führungselement 44 ragt in den vom Rohrgrundkörper umschlossenen Rohrinnenraum, insbesondere in radialer Richtung bezüglich der Rohrlängsachse 15, vor mit einer ersten Höhe h₁, die mindestens 1,0 % des Innendurchmessers dᵢ des Innenrohrs 34 beträgt.

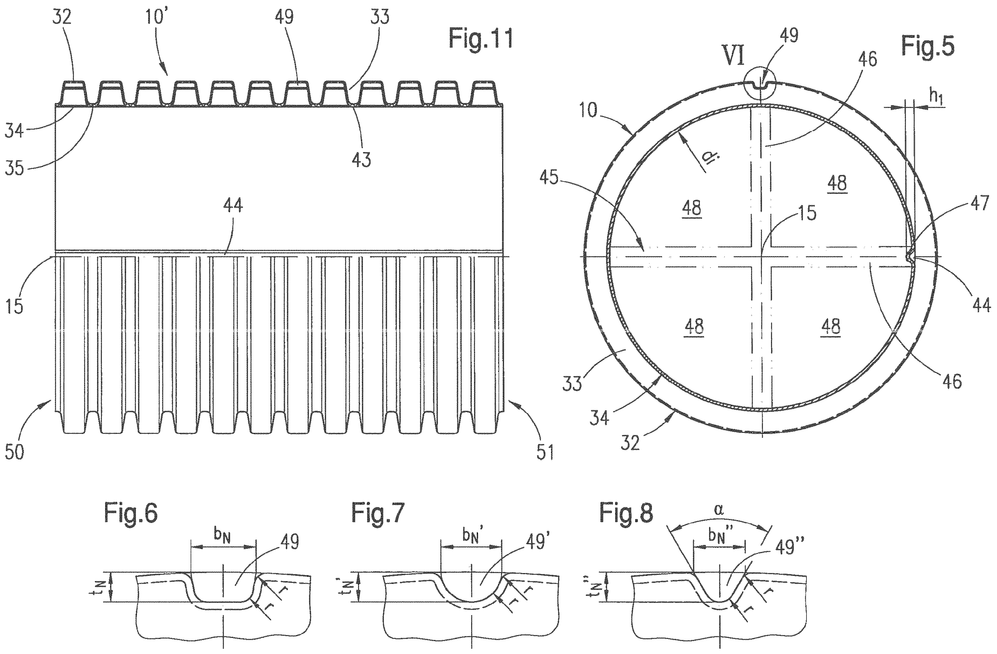

An dem Führungselement 44 ist ein in Fig. 5 gestrichelt dargestelltes Trennelement 45 gehalten. Das Trennelement 45 ist als Kreuzprofil ausgeführt und konzentrisch zur Rohrlängsachse 15 angeordnet. Das Trennelement 45 weist zwei sich kreuzende Stege 46 auf, die zentral und einteilig miteinander verbunden sind. Das Trennelement 45 kann auch eine andere Profilform aufweisen und insbesondere plattenförmig ausgeführt sein. Es kann vorteilhaft sein, wenn mehrere Führungselemente 44 entlang des inneren Umfangs der Rohrinnenseite 43 angeordnet sind, um die Halterung des Trennelements zu verbessern.

Der dem Führungselement 44 zugewandte Steg 46 weist eine dem Führungselement 44 korrespondierende Stirnseitenkontur 47 auf, mit der das Trennelement 45 in das Innenrohr 34 einschiebbar und an dem Führungselement 44 gehalten ist. Das Trennelement 45 ist verdrehsicher und winkelgenau bezüglich der Rohrlängsachse 15 in dem Verbundrohr 10 gehalten. Mit dem Trennelement 45 wird der Rohrinnenraum des Verbundrohres 10 in vier, insbesondere gleichgroße, Teilkanäle 48 unterteilt. Die Teilkanäle 48 werden auch als Mehrfachkanäle bezeichnet. Das Führungselement 44 garantiert eine Verdrehsicherung des Trennelements 45 bezüglich der Rohrlängsachse 15. Mit den drei übrigen Stirnseiten der Stege 46 ist das Trennelement 45 jeweils an der Rohrinnenseite 43 abgestützt. Das Trennelement 45 ist robust in dem Rohrgrundkörper angeordnet. Eine unbeabsichtigte Veränderung der Drehposition des Trennelements 45 bezüglich der Rohrlängsachse 15 ist zuverlässig verhindert.

An den Erhebungen 33 ist an dem Außenrohr 32 ein Verdrehschutzelement 49 in Form einer Außennut ausgebildet. Das Verdrehschutzelement 49 bildet eine radiale Vertiefung bezüglich der Rohrlängsachse 15. Das Verdrehschutzelement 49 ist bezüglich der Rohrlängsachse 15 exzentrisch angeordnet mit einem Radialabstand zu der Rohrlängsachse 15. In axialer Richtung ist das Verdrehschutzelement 49 entlang mehrerer Erhebungen 33 ausgeführt. Insbesondere erstreckt sich das Verdrehschutzelement 49 in axialer Richtung ausgehend von einem ersten Rohrende 50, insbesondere durchgängig bis zu einem gegenüberliegenden zweiten Rohrende 51 oder bis zu der an dem Verbundrohr 10 angeformten Rohrmuffe 36.

Alternativ kann das Verdrehschutzelement 49 in einem nicht gezeigten Ausführungsbeispiel als Steg ausgeführt sein. Entsprechend sind die Erhebungen 33 im Bereich des Verdrehschutzelements radial bezüglich der Rohrlängsachse 15 erhaben ausgeführt.

Die Außennut weist eine Nuttiefe t_{N} und eine Nutbreite b_{N} auf. Bei der Ausgestaltung der Außennut 49 gemäß Fig. 5 und 6, die einen im Wesentlichen rechteckförmigen Nutquerschnitt aufweist, ist die Nuttiefe t_{N} etwa halb so groß wie die Nutbreite b_{N}. Insbesondere gilt: t_{N} = 1,0 x b_{N} ... 3,0 x b_{N}. Wie insbesondere in Fig. 6 dargestellt, sind die Ecken des Nutquerschnitts mit Rundungsradien r abgerundet. Insbesondere wird ein einheitlicher Rundungsradius r angewendet, der insbesondere mindestens 2,0 mm beträgt.

Gemäß dem Ausführungsbeispiel in Fig. 7 ist der Nutquerschnitt des Verdrehschutzelements 49' halbkreisförmig ausgeführt, wobei die Nuttiefe t_{N}' etwa die Hälfte der Nutbreite b_{N}' beträgt. Bei einer V-förmigen Querschnittsform der Außennut 49" gemäß Fig. 8 ist die Nuttiefe t_{N}" vergleichsweise größer und beträgt zwischen 50 % und 100 % der Nutbreite b_{N}". Ein Öffnungswinkel α der V-Form beträgt zwischen 30° und 90°, insbesondere zwischen 45° und 75° und insbesondere 60°.

Wie insbesondere in Fig. 2 ersichtlich ist, sind die Halbkokillen 12, 12' so ausgebildet, dass jeweils in vorgegebenen Abständen innerhalb des endlos hergestellten Verbundrohres 10 Rohrmuffen 36 ausgebildet werden. Hierzu ist in einem Paar von Halbkokillen 12, 12' eine im Wesentlichen zylindrische Muffenausnehmung 37 ausgebildet, die also eine im Wesentlichen glatte, zylindrische Wand 38 aufweist.

Zwischen der Wand 38 der Muffenausnehmung 37 und der in Förderrichtung 4 voreilenden Formausnehmung 28 ist ein Übergangsabschnitt 39 ausgebildet. An das - in Förderrichtung 4 - nacheilende Ende der Wand 38 der Muffenausnehmung 37 schließt sich ein kegelstumpfförmiger Formabschnitt 40 an, in dem ein sich nach außen erweiterndes Einführende 41 der Muffe 36 ausgeformt wird. Daran schließt sich wiederum ein Übergangsabschnitt 42 an, der zur nächsten - in Förderrichtung 4 nacheilenden - Formausnehmung 28 führt.

Soweit die Vorrichtung bis hierher beschrieben ist, ist sie im Wesentlichen aus EP 0 995 579 A2 bekannt, worauf ausdrücklich verwiesen wird.

Die Kunststoffmuffe 36 ist einteilig an dem Verbundrohr 10 angeformt. Die Muffe 36 wird auch als Verbindungsmuffe bezeichnet. Die Muffe 36 weist eine Muffenlängsachse 52 auf, die mit der Rohrlängsachse 15 des einteilig angeformten Verbundrohrs 10 zusammenfällt. Die Muffe 36 weist eine dem ersten Rohrende 50 gegenüberliegende Einführöffnung 53 auf, die als offenes Ende eines zu der Einführöffnung 53 hin aufweitenden Einführabschnitts 54 angeordnet ist. Der Einführabschnitt 54 ist bezüglich der Muffenlängsachse 52 konisch erweiternd ausgeführt mit einem halben Öffnungswinkel β zwischen 10° und 25°.

Dem Einführabschnitt 54 schließt sich zunächst ein Muffenrohrabschnitt 55 und danach ein Dichtungsabschnitt 56 an. Der Muffenrohrabschnitt 55 ist bezüglich der Muffenlängsachse 52 zylindrisch und/oder zumindest abschnittsweise leicht konisch aufweitend ausgeführt. An einer Innenwand 57 des Muffenrohrabschnitts 55 ist ein Verdrehschutzgegenelement 58 ausgebildet und insbesondere einteilig an dem Muffenrohrabschnitt 55 ausgebildet. Das Verdrehschutzgegenelement 58 ist als erhabene Struktur, die gegenüber der Innenwand 57 des Muffenrohrabschnitts 55 in radialer Richtung bezüglich der Muffenlängsachse 52 vorsteht. Das Verdrehschutzgegenelement 58 ist als Steg ausgeführt, der an der Innenwand 57 radial vorsteht. Das Verdrehschutzgegenelement 58 ist mit einem rechteckförmigen Profilquerschnitt ausgeführt, der zu der Nutkontur des Verdrehschutzelements 49 gemäß Fig. 5 und 6 korrespondiert. Insbesondere sind die Außenmaße des Verdrehschutzgegenelements 58 geringfügig kleiner als die Innenmaße des Verdrehschutzelements 49. Das Verdrehschutzelement 49 ist passgenau an dem Verdrehschutzgegenelement 58 angeordnet. Der Verdrehschutzgegenelement 58 ist exzentrisch bezüglich der Muffenlängsachse 52 angeordnet, also insbesondere mit einem Radialabstand.

Das Verdrehschutzgegenelement 58 weist eine der Einführöffnung 53 zugewandte, axiale Einführschräge 61 auf. Das Verdrehschutzgegenelement 58 weist eine axiale Länge L auf, die größer ist, als ein Axialabstand Dₐ zwischen zwei benachbarten Erhebungen 33 eines korrespondierenden Kunststoffrohres 10. Dadurch ist gewährleistet, dass das Verdrehschutzgegenelement 58 an dem Verdrehschutzelement 49 an zwei in Axialrichtung benachbart angeordneten Erhebungen 33 angeordnet ist. Der Verdrehschutz ist dadurch mechanisch besonders robust ausgeführt.

Der Dichtungsabschnitt 56 ist verdrehschutzgegenelementfrei ausgebildet. Das bedeutet insbesondere, dass die Innenwand 57 im Bereich des Dichtungsabschnitts 56 vollständig durchgängig zylindrisch ist.

In axialer Richtung bezüglich der Muffenlängsachse 52 schließt sich dem Dichtungsabschnitt 56 ein Erweiterungsabschnitt 59 an, der einen Durchmesserübergang von dem Innenrohr 34 des Verbundrohrs 10 zu der Außenwand der Muffe 36 darstellt. Der Erweiterungsabschnitt 59 dient als Axialanschlagelement für die Muffe 36. Mit den Axialanschlagelement 59 wird eine maximale axiale Einschubtiefe des Verbundrohrs 10 an der Muffe 36 festgelegt.

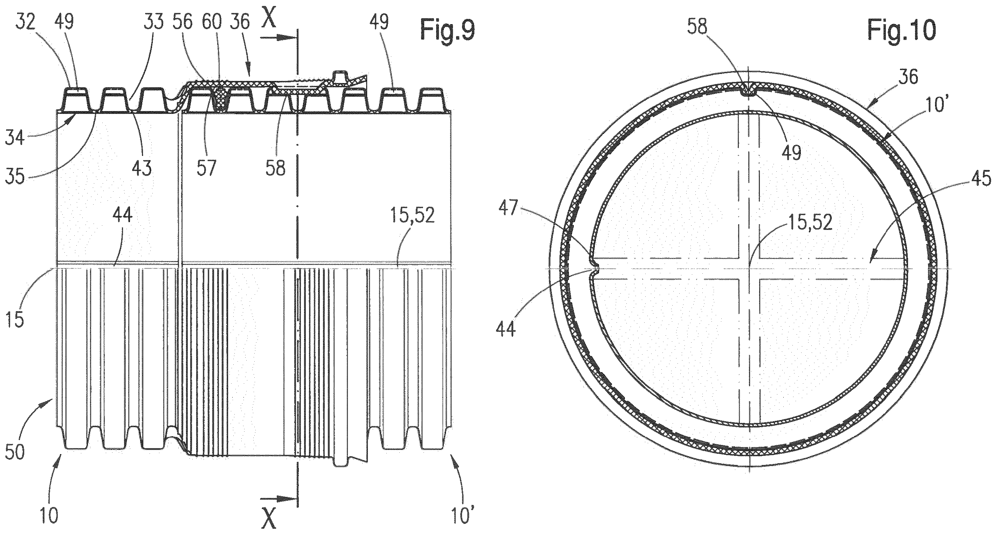

Bei der Anordnung mit dem Verbundrohr 10 und der einteilig angeformten Verbindungsmuffe 36 in Fig. 9 ist ein weiteres Verbundrohr 10' in die Verbindungsmuffe 36 axial eingeschoben. Das Verbundrohr 10' weist ein Verdrehschutzelement 49 auf, das mit dem Verdrehschutzgegenelement 58 der Muffe 36 korrespondiert. Das stegartige Verdrehschutzgegenelement 58 greift in das nutförmige Verdrehschutzelement 49 ein und gewährleistet damit einen zuverlässigen Verdrehschutz des Verbundrohres 10' gegenüber dem Verbundrohr 10. Insbesondere ist eine andere Drehwinkelpositionierung des Verbundrohres 10' gegenüber der Muffe 36 als in Fig. 10 dargestellt nicht möglich.

Dadurch, dass in dem Dichtungsabschnitt 56 keine Verdrehschutzgegenelemente 58 angeordnet sind, ist es möglich, ein Dichtungselement 60, insbesondere in Form eines Profildichtrings zwischen zwei Erhebungen 33 des Verbundrohrs 10' anzuordnen. Die Abdichtung des Verbundrohrs 10' in der Muffe 36 ist zuverlässig gewährleistet. Der Profildichtring 60 kann gegenüber der kreiszylindrischen glatten Innenwand 57 im Bereich des Dichtungsabschnitts 56 zuverlässig abdichten.

Das Kunststoffrohr 10 kann auch als Rippenrohr mit entsprechenden rippenförmigen Erhebungen ausgeführt sein. Ein derartiges Rippenrohr ist aus EP 0 531 750 A2 und seine Herstellung aus DE 2450171 C2 bekannt, worauf ausdrücklich verwiesen wird.

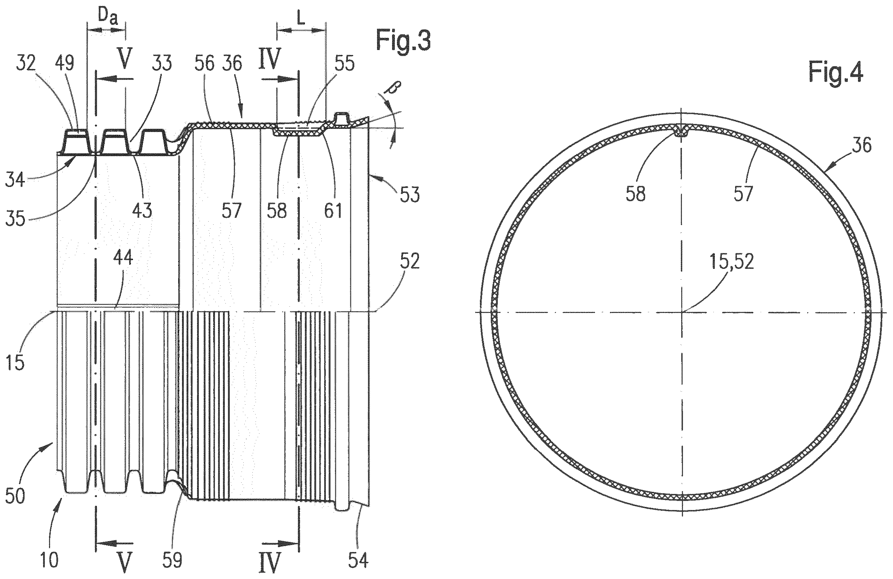

Das Verbundrohr 10' ist in Fig. 11 separat dargestellt. Es unterscheidet sich von dem Verbundrohr 10 gemäß Fig. 3 dahingehend, dass keine Verbindungsmuffe angeformt ist. Bei dem Verbundrohr 10' ist das Verdrehschutzelement 49 axial vollständig durchgängig ausgeführt.

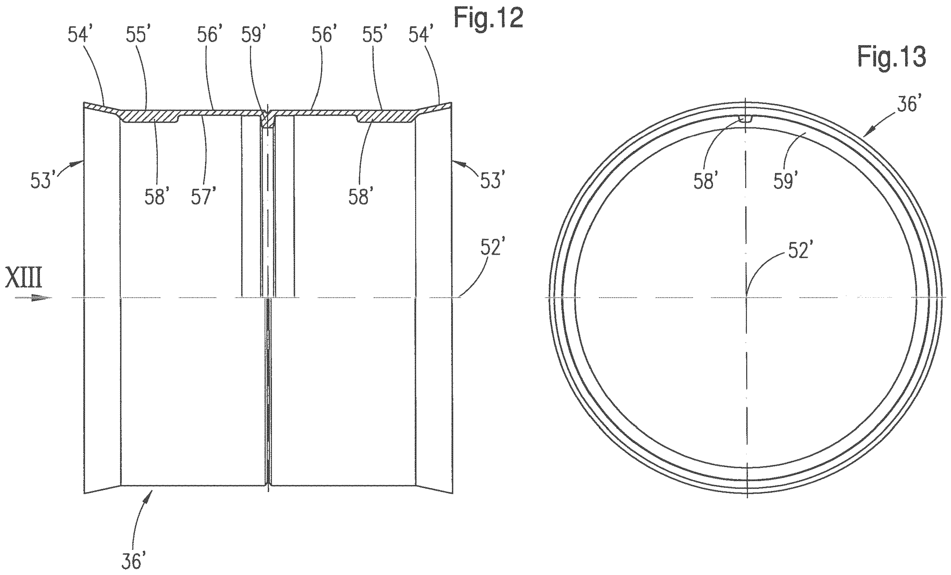

Zur Verbindung von zwei Verbindungsrohren 10' dient eine Kunststoffmuffe 36' gemäß Fig. 12 und 13, die als Doppelsteckmuffe ausgeführt ist. Die Doppelsteckmuffe 36' weist entsprechend zwei einander abgewandt angeordnete Einführöffnungen 53', entsprechende Einführabschnitte 54', Muffenrohrabschnitte 55', Dichtungsabschnitte 56' und ein, insbesondere axial mittig angeordnetes, Axialanschlagelement 59` auf. Das Axialanschlagelement 59' ist als Innensteg ausgeführt, der eine Steghöhe aufweist, die größer ist als die Nuttiefe der Verdrehschutzelemente 49. Das Axialanschlagelement 59` bildet eine ringflächenförmige Anlageschulter, die eine zuverlässige und stabile Axialsicherung für die Verbundrohre 10' schafft. Insbesondere ist das Axialanschlagelement 59' mit einer entsprechenden Axialbreite ausgeführt, sodass mit der Doppelsteckmuffe 36' verbundene Verbundrohre 10' stirnseitig anliegend miteinander verbunden sind.

## Patentansprüche

1. Anordnung mit
a. einem Kunststoffrohr (10; 10') mit
aa. Mehrfachkanälen als mehreren, sich jeweils entlang einer Rohrlängsachse (15) erstreckenden Kammern (48) in einem Rohrinnenraum des Kunststoffrohres (10; 10'),
bb. senkrecht zur Rohrlängsachse (15) orientierten Erhebungen (33) an einer Rohraußenseite,
cc. einem an den Erhebungen (33) angeordneten Verdrehschutzelement (49; 49'; 49"), das sich parallel zur Rohrlängsachse (15) erstreckt, und
b. mit einer mit dem Kunststoffrohr (10; 10') verdrehsicher verbundenen Kunststoffmuffe (36; 36'), wobei die Kunststoffmuffe (36; 36') aufweist
aa. eine Muffenlängsachse (52; 52'),
bb. ein Axialanschlagelement (59; 59') zum axialen Anliegen des Kunststoffrohres (10; 10') in der Kunststoffmuffe (36; 36'),
cc. einen an das Axialanschlagelement (59; 59') anschließenden Muffenrohrabschnitt (55; 55'),
dd. einen zu einer Einführöffnung (53; 53') hin aufweitenden Einführabschnitt (54; 54'),
wobei an einer Innenwand (57; 57') des Muffenrohrabschnitts (55; 55') ein zu dem Verdrehschutzelement (49; 49'; 49") des Kunststoffrohres (10; 10') korrespondierendes Verdrehschutzgegenelement (58; 58') angeordnet ist.

2. Anordnung gemäß Anspruch 1, **dadurch gekennzeichnet, dass** das Verdrehschutzelement (49; 49'; 49") als Nut oder als Steg an den Erhebungen (33) ausgebildet ist.

3. Anordnung gemäß einem der vorstehenden Ansprüche, **dadurch gekennzeichnet, dass** das Verdrehschutzelement (49; 49'; 49") an den Erhebungen (33) einteilig angeformt ist.

4. Anordnung gemäß einem der vorstehenden Ansprüche, **dadurch gekennzeichnet, dass** das Verdrehschutzelement (49; 49'; 49") axial durchgängig ausgeführt ist.

5. Anordnung gemäß einem der vorstehenden Ansprüche, **dadurch gekennzeichnet, dass** das Verdrehschutzelement (49; 49'; 49") in einer zur Rohrlängsachse (15) senkrecht orientierten Ebene eine Kontur aufweist, die rechteckig, V-förmig oder halbkreisförmig ausgeführt ist.

6. Anordnung gemäß einem der vorstehenden Ansprüche, **dadurch gekennzeichnet, dass** das Verdrehschutzelement (49; 49'; 49") in einer zur Rohrlängsachse (15) senkrecht orientierten Ebene eine Kontur aufweist, deren Ecken mit einem Radius (r) abgerundet sind, wobei der Radius (r) insbesondere mindestens 2,0 mm beträgt.

7. Anordnung gemäß einem der vorstehenden Ansprüche, **dadurch gekennzeichnet, dass** das Kunststoffrohr (10; 10') als Verbundrohr oder als Rippenrohr ausgeführt ist.

8. Anordnung gemäß einem der vorstehenden Ansprüche, **gekennzeichnet durch** mindestens ein an einer Rohrinnenseite (43) angeordnetes, insbesondere integral ausgebildetes, Führungselement (44) zum Halten mindestens eines Trennelements (45).

9. Anordnung gemäß einem der vorstehenden Ansprüche, **dadurch gekennzeichnet, dass** in Richtung der Muffenlängsachse (52; 52') an dem Muffenrohrabschnitt (55; 55') ein dem Axialanschlagelement (59; 59') zugewandter Dichtungsabschnitt (56; 56') ausgebildet ist, der verdrehschutzgegenelementfrei ausgeführt ist.

10. Anordnung gemäß einem der vorstehenden Ansprüche, **dadurch gekennzeichnet, dass** die Kunststoffmuffe als Doppelsteckmuffe (36`) ausgeführt ist.

11. Anordnung gemäß einem der Ansprüche 1 bis 9, **dadurch gekennzeichnet, dass** die Kunststoffmuffe als eine an ein Verbundrohr (10; 10') einteilig angeformte Verbindungsmuffe (36) ausgeführt ist.

## Claims

1. An assembly comprising
a. a plastic pipe (10; 10') comprising
aa. multichannels as a plurality of chambers (48) each extending along a pipe longitudinal axis (15) in a pipe interior of the plastic pipe (10; 10'),
bb. elevations (33) orientated so as to be perpendicular to the pipe longitudinal axis (15) on an outer side of the pipe,
cc. an anti-rotation member (49; 49'; 49") arranged at the elevations (33) extending parallel to the pipe longitudinal axis (15), and
b. comprising a plastic sleeve (36; 36') connected to the plastic pipe (10; 10') in a non-rotatable manner, wherein the plastic sleeve (36; 36') comprises
aa. a sleeve longitudinal axis (52; 52'),
bb. an axial stop member (59; 59') for axial abutment of the plastic pipe (10; 10') in the plastic sleeve (36; 36'),
cc. a sleeve pipe section (55; 55') adjoining the axial stop member (59; 59'),
dd. an insertion section (54; 54') widening towards an insertion opening (53; 53'),
wherein an anti-rotation countermember (58; 58') corresponding to the anti-rotation member (49; 49'; 49") of the plastic pipe (10; 10') is arranged on an inner wall (57; 57') of the sleeve pipe section (55; 55').

2. Assembly according to claim 1, wherein the anti-rotation member (49; 49'; 49") is formed one of as a groove or as a web at the elevations (33).

3. Assembly according to one of the preceding claims, wherein the anti-rotation member (49; 49'; 49") is molded in one piece at the elevations (33).

4. Assembly according to one of the preceding claims, wherein the anti-rotation member (49; 49'; 49") is designed to be axially continuous.

5. Assembly according to one of the preceding claims, wherein the anti-rotation member (49; 49'; 49") has one of a rectangular, V-shaped or semi-circular contour in a plane orientated perpendicular to the pipe longitudinal axis (15).

6. Assembly according to one of the preceding claims, wherein the anti-rotation member (49; 49'; 49") has a contour in a plane orientated perpendicular to the pipe longitudinal axis (15), the corners of which contour are rounded with a radius (r), wherein the radius (r) is in particular at least 2.0 mm.

7. Assembly according to one of the preceding claims, wherein the plastic pipe (10; 10') is designed one of as a composite pipe or as a ribbed tube.

8. Assembly according to one of the preceding claims, comprising at least one, in particular integrally designed, guide element (44), arranged on an inner pipe side (43) for holding at least one separating member (45).

9. Assembly according to one of the preceding claims, wherein a sealing section (56; 56') facing the axial stop member (59; 59') is formed on the sleeve pipe section (55; 55') in the direction of the sleeve longitudinal axis (52; 52'), which is designed to be free of anti-rotation counter-members.

10. Assembly according to one of the preceding claims, wherein the plastic sleeve is designed as a double plug-in sleeve (36').

11. Assembly according to one of claims 1 to 10, wherein the plastic sleeve is designed as a connection sleeve (36) molded in one piece on a composite pipe (10; 10').

## Revendications

1. Ensemble comprenant :
a. un tube en plastique (10 ; 10') avec :
aa. plusieurs canaux sous la forme de plusieurs chambres (48) s'étendant chacune le long d'un axe longitudinal de tube (15) dans un espace intérieur de tube du tube en plastique (10 ; 10'),
bb. des élévations (33) orientées perpendiculairement à l'axe longitudinal de tube (15) sur une face extérieure de tube,
cc. un élément anti-rotation (49 ; 49' ; 49") disposé sur les élévations (33) et s'étendant parallèlement à l'axe longitudinal de tube (15), et
b. avec un manchon en plastique (36 ; 36') relié au tube en plastique (10 ; 10') de manière à empêcher toute rotation, le manchon en plastique (36 ; 36') présentant :
aa. un axe longitudinal de manchon (52 ; 52'),
bb. un élément de butée axiale (59 ; 59') pour l'appui axial du tube en plastique (10 ; 10') dans le manchon en plastique (36 ; 36'),
cc. une section tubulaire de manchon (55 ; 55') se raccordant à l'élément de butée axiale (59 ; 59'),
dd. une section d'insertion (54 ; 54') s'élargissant vers une ouverture d'insertion (53 ; 53'),
dans lequel un élément anti-rotation complémentaire (58 ; 58') correspondant à l'élément anti-rotation (49 ; 49' ; 49") du tube en plastique (10 ; 10') est disposé sur une paroi intérieure (57 ; 57') de la section tubulaire de manchon (55 ; 55').

2. Ensemble selon la revendication 1, **caractérisé en ce que** l'élément anti-rotation (49 ; 49' ; 49") est réalisé sous la forme d'une rainure ou d'une nervure sur les élévations (33).

3. Ensemble selon l'une des revendications précédentes, **caractérisé en ce que** l'élément anti-rotation (49 ; 49' ; 49") est formé d'une seule pièce sur les élévations (33).

4. Ensemble selon l'une des revendications précédentes, **caractérisé en ce que** l'élément anti-rotation (49 ; 49' ; 49") est réalisé de manière continue dans la direction axiale.

5. Ensemble selon l'une des revendications précédentes, **caractérisé en ce que** l'élément anti-rotation (49 ; 49' ; 49") présente, dans un plan orienté perpendiculairement à l'axe longitudinal de tube (15), un contour qui est rectangulaire, en forme de V ou en forme de demi-cercle.

6. Ensemble selon l'une des revendications précédentes, **caractérisé en ce que** l'élément anti-rotation (49 ; 49' ; 49") présente, dans un plan orienté perpendiculairement à l'axe longitudinal de tube (15), un contour dont les angles sont arrondis avec un rayon (r), le rayon (r) étant en particulier d'au moins 2,0 mm.

7. Ensemble selon l'une des revendications précédentes, **caractérisé en ce que** le tube en plastique (10 ; 10') est réalisé sous la forme d'un tube composite ou d'un tube nervuré.

8. Ensemble selon l'une des revendications précédentes, **caractérisé par** au moins un élément de guidage (44) disposé sur une face intérieure de tube (43), en particulier réalisé de manière intégrée, pour maintenir au moins un élément de séparation (45).

9. Ensemble selon l'une des revendications précédentes, **caractérisé en ce qu'**une section d'étanchéité (56 ; 56') tournée vers l'élément de butée axiale (59 ; 59') est formée dans la direction de l'axe longitudinal de manchon (52 ; 52') sur la section tubulaire de manchon (55 ; 55') et réalisée sans élément anti-rotation complémentaire.

10. Ensemble selon l'une des revendications précédentes, **caractérisé en ce que** le manchon en plastique est réalisé sous la forme d'un manchon à double emboîtement (36').

11. Ensemble selon l'une des revendications 1 à 9, **caractérisé en ce que** le manchon en plastique est réalisé sous la forme d'un manchon de liaison (36) formé d'une seule pièce sur un tube composite (10 ; 10').
